# EUROPEAN PATENT APPLICATION

(11) **EP 4 825 940 A1**
(43) Date of publication of application: **21.10.2026**
(21) Application number: 24903359.8
(22) Date of filing: 29.10.2024
(51) Int. Cl.: C09K 3/10, B32B 5/20, B32B 25/16, C08J 9/04, C09K 3/12

(54) **SEALING MATERIAL**

(30) Priority: 13.12.2023 JP 2023209858
(71) Applicant: NICHIAS CORPORATION, Tokyo 104-8555 (JP)
(72) Inventor: AOYAGI, Hideharu, Tokyo 104-8555 (JP); ASANUMA, Shuji, Tokyo 104-8555 (JP)
(74) Representative: Grünecker Patent- und Rechtsanwälte PartG mbB
(86) International application number: PCT/JP2024/038450
(87) International publication number: WO 2025/126697

(57) **Abstract**

To provide a new sealing material exhibiting excellent adhesion (sealability) at a low surface pressure. A sealing material having an elastic layer including a foam rubber layer and pressure-sensitive adhesive layers each disposed on both main surfaces of the elastic layer, in which the foam rubber layer is formed of foam of an unfoamed rubber layer containing an ethylene-propylene-diene terpolymer (EPDM), a crosslinking agent, a crosslinking accelerator, and a foaming agent, the crosslinking agent is a phenol resin crosslinking agent, and the crosslinking accelerator is an organic sulfonic acid compound.

## Description

### [Technical Field]

The present invention relates to a sealing material.

### [Background Art]

Conventionally, foam rubber has been used as sealing materials for a variety of industrial products, such as automobiles, vehicles, ships, and for a variety of electrical/electronic equipment, which are for the purposes of dustproof, heat-insulating, soundproof, antivibration, shock-absorbing, watertight, airtightness, and the like properties.

For example, in the automotive field, there is an increasing demand for sealing materials that are used in electrical component protection cases and the like in the storage sections of a variety of electrical/electronic equipment constituting hybrid vehicles or electric vehicles.

Examples of sealing materials that are used in sections constituted by fastening a pair of flanges having low rigidity with small bolts, like the above-described electrical component protection cases, include sealing materials formed of foam rubber having a foam rubber layer(s) on a single surface or both surfaces of a base material formed of a metal plate or the like (refer to Patent Literature 1 and Patent Literature 2).

### [Citation List]

### [Patent Literature]

[Patent Literature 1] Japanese Patent No. 4814895
[Patent Literature 2] Japanese Patent No. 5852470

### [Summary of Invention]

### [Technical Problem]

In sections constituted by fastening a pair of flanges having low rigidity with small bolts, like the above-described electrical component protection cases, there is a demand for sufficient sealability exhibited by a low clamping surface pressure that is generated between the bolts due to the waviness of the flanges.

However, in the case of using the above-described sealing material having a foam rubber layer on a base material formed of a metal plate or the like as a sealing material formed of foam rubber, there is a case where adhesion between the base material formed of a metal plate and the foam rubber layer deteriorates due to, for example, a fluid which is a sealing target that permeates therebetween and the sealability deteriorates.

On the other hand, in the case of increasing the clamping force of the flanges to increase the clamping surface pressure, a constituent member may break when vibration or shock has been applied thereto during clamping or during driving after clamping.

Therefore, there has been a demand for a sealing material exhibiting excellent sealability at a low surface pressure as a sealing material used in electrical component protection cases and the like.

In addition, as a sealing material, a water-stopping sealing material that is provided in automobile doors is known.

The water-stopping sealing material is provided in a state of being compressed in an automobile door and is in a state of being likely to receive intermittent shocks due to vibrations during the opening and closing of the door or during operation.

Therefore, there has been a demand for a sealing material exhibiting excellent sealability at a low surface pressure also as the water-stopping sealing material that is provided in automobile doors.

Furthermore, as a sealing material, for example, a water-stopped sealing material that is provided in a variety of electronic equipment including mobile devices, such as mobile phones or tablet computers, or automotive electronic equipment is known.

The sealing material is provided in a state of being compressed in electronic equipment and is in a state of being likely to receive intermittent shocks due to vibrations during use or during operation.

Therefore, there has been a demand for a sealing material exhibiting excellent sealability at a low surface pressure also as a water-stopping sealing material that is provided in electronic equipment.

Under such circumstances, an object of the present invention is to provide a new sealing material exhibiting high adhesion (sealability) at a low surface pressure.

### [Solution to Problem]

As a result of conducting intensive studies to achieve the above-described object, the present inventors have found that the above-described technical problem can be solved by a sealing material having an elastic layer formed of a specific foam rubber layer and pressure-sensitive adhesive layers each disposed on both main surfaces of the elastic layer, and completed the present invention based on the present finding.

More specifically, the present invention provides
(1) a sealing material comprising: an elastic layer including a foam rubber layer and pressure-sensitive adhesive layers each disposed on both main surfaces of the elastic layer,
   wherein the foam rubber layer is formed of foam of an unfoamed rubber layer containing an ethylene-propylene-diene terpolymer (EPDM), a phenol resin crosslinking agent, a crosslinking accelerator, and a foaming agent, and
   the crosslinking accelerator is an organic sulfonic acid compound,
(2) the sealing material according to (1), wherein a content percentage of the phenol resin crosslinking agent in the unfoamed rubber layer is 2.0 to 20.0 mass% in terms of solid content,
(3) the sealing material according to (1) or (2), wherein the elastic layer is formed only of the foam rubber layer, or is formed of a layered integrated body having the foam rubber layers each disposed on both main surfaces of a base material layer formed of a metal plate or a resin plate,
(4) the sealing material according to any one of (1) to (3), wherein an amount of a diene constituting the ethylene-propylene-diene terpolymer (EPDM) is 1 to 20 mass%,
(5) the sealing material according to any one of (1) to (4), wherein the foam rubber layer is foam having a foaming ratio 1.5 times or more larger than a foaming ratio of the unfoamed rubber layer,
(6) the sealing material according to any one of (1) to (5), wherein the pressure-sensitive adhesive layer contains at least one selected from an urethane resin, natural rubber, butadiene rubber, isoprene rubber, styrene butadiene, nitrile rubber, an ethylene-propylene-diene terpolymer, butyl rubber, chloroprene rubber, a thermoplastic elastomer, and a water addition product of any thereof, and
(7) the sealing material according to (6), wherein the thermoplastic elastomer is at least one selected from a styrene-based elastomer, an olefin-based thermoplastic elastomer, a vinyl chloride-based thermoplastic elastomer, an ester-based thermoplastic elastomer, and an amide-based thermoplastic elastomer.

### [Advantageous Effects of Invention]

According to the present invention, it is possible to provide a new sealing material exhibiting high adhesion (sealability) at a low surface pressure.

### [Brief Description of Drawings]

[Figure 1] Figure 1 is a view schematically showing a vertical section in one form example of a sealing material according to the present invention.
[Figure 2] Figure 2 is a view schematically showing a vertical section in another form example of the sealing material according to the present invention.

### [Description of Embodiment]

A sealing material according to the present invention has an elastic layer including a foam rubber layer and pressure-sensitive adhesive layers each disposed on both main surfaces of the elastic layer,
wherein the foam rubber layer is formed of foam of an unfoamed rubber layer containing an ethylene-propylene-diene terpolymer (EPDM), a phenol resin crosslinking agent, a crosslinking accelerator, and a foaming agent, and
the crosslinking accelerator is an organic sulfonic acid compound.

The sealing material according to the present invention has a layered structure including an elastic layer and pressure-sensitive adhesive layers each disposed on both main surfaces of the elastic layer.

In the sealing material according to the present invention, the elastic layer includes a foam rubber layer.

In the sealing material according to the present invention, examples of the form of the elastic layer include, in addition to a form formed only of the foam rubber layer (hereinafter referred to as a first form), a form formed of a layered integrated body having foam rubber layers each disposed on both main surfaces of a base material layer formed of a metal plate or a resin plate (hereinafter referred to as a second form).

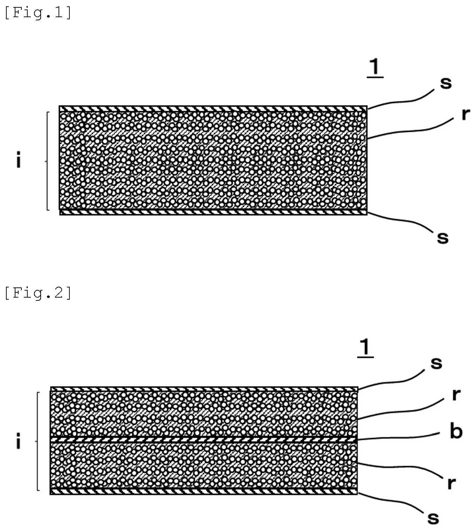

Figure 1 is a schematic view of a vertical section in one form example of the sealing material according to the present invention and shows a form example of a case where the elastic layer employs the first form.

In the form example shown in Figure 1, a sealing material 1 includes an elastic layer i formed only of a foam rubber layer r and pressure-sensitive adhesive layers s and s each disposed on both main surfaces of the elastic layer i.

In addition, Figure 2 is a schematic view of a vertical section in another form example of the sealing material according to the present invention and shows a form example of a case where the elastic layer employs the second form.

In Figure 2, the sealing material 1 includes an elastic layer i formed of a layered integrated body of a base material layer b formed of a metal plate or a resin plate and foam rubber layers r and r each disposed on both main surfaces of the base material layer, and pressure-sensitive adhesive layers s and s each disposed on both main surfaces of the elastic layer i.

In the sealing material according to the present invention, the thickness of the elastic layer is preferably 300 to 800 mm and more preferably 400 to 700 mm.

The thickness of the elastic layer means an arithmetic average value of thicknesses measured at 10 sites using a dial gauge.

In the sealing material according to the present invention, when the thickness of the elastic layer is within the above-described range, it is possible to easily provide a sealing material having a desired density, desired flexibility, and excellent adhesion (sealability).

In the sealing material according to the present invention, in a case where the elastic layer employs the first form, that is, a form formed (only) of a foam rubber layer, the thickness of the elastic layer corresponds to the thickness of the foam rubber layer.

In the sealing material according to the present invention, in a case where the elastic layer employs the second form, that is, a form formed of a layered integrated body having foam rubber layers each disposed on both main surfaces of a base material layer formed of a metal plate or a resin plate, the thickness of the elastic layer corresponds to a thickness obtained by summing the thickness of the base material layer formed of a metal plate or a resin plate and the thicknesses of the foam rubber layers.

In the sealing material according to the present invention, the foam rubber layer constituting the elastic layer is formed of foam of an unfoamed rubber layer.

In the sealing material according to the present invention, the foam rubber layer is preferably foam having a foaming ratio 1.5 times or more larger than a foaming ratio of the unfoamed rubber layer, more preferably foam having a foaming ratio 2.0 times or more larger than the foaming ratio of the unfoamed rubber layer, and still more preferably foam having a foaming ratio 2.5 times or more larger than the foaming ratio of the unfoamed rubber layer.

The upper limit of the foaming ratio of the unfoamed rubber layer is not particularly limited, but the foaming ratio of unfoamed rubber layer is normally 6.0 times or less.

In the sealing material according to the present invention, when the foaming ratio of the unfoamed rubber layer is 1.5 times or more, it is possible to easily exhibit excellent adhesion (sealability) even in a case where the surface pressure is low.

In the present application documents, the foaming ratio means a value calculated by the following formula. 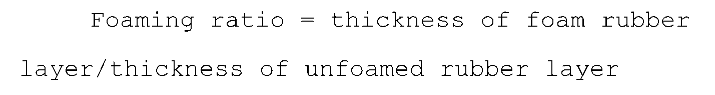 Foaming ratio = thickness of foam rubber layer/thickness of unfoamed rubber layer (wherein the thickness of the foam rubber layer means an arithmetic average value of thicknesses measured at 10 sites using a dial gauge, and the thickness of the unfoamed rubber layer also means an arithmetic average value of thicknesses measured at 10 sites using the dial gauge.)

In the sealing material according to the present invention, the foam rubber layer is formed of foam of an unfoamed rubber layer containing an ethylene-propylene-diene terpolymer (EPDM), which is a rubber component, a phenol resin crosslinking agent, a crosslinking accelerator, and a foaming agent.

Regarding the ethylene-propylene-diene terpolymer (EPDM), the amount of a diene constituting EPDM is preferably 1 to 20 mass% and more preferably 5 to 15 mass%.

When the amount of the diene constituting EPDM is within the above-described range, it is possible to easily impart desired collapse resistance to the foam rubber layer.

When the unfoamed rubber layer contains the ethylene-propylene-diene terpolymer (EPDM) as a rubber component, it is possible to easily obtain a foam rubber layer having desired characteristics.

The content of the ethylene-propylene-diene terpolymer (EPDM) in the unfoamed rubber layer in terms of solid content is preferably 10 to 90 mass% and more preferably 30 to 70 mass%.

When the unfoamed rubber layer contains the ethylene-propylene-diene terpolymer (EPDM) in the above-described percentage, it is possible to easily provide a sealing material having excellent adhesion (sealability) and resilience.

In addition, in the sealing material according to the present invention, the unfoamed rubber layer contains a phenol resin crosslinking agent as a crosslinking agent.

The content of the phenol resin crosslinking agent in the unfoamed rubber layer in terms of solid content is preferably 2.0 to 20.0 mass% and more preferably 2.6 to 17.5 mass%.

When the unfoamed rubber layer contains the phenol resin crosslinking agent in the above-described percentage, it is possible to easily provide a sealing material having excellent adhesion (sealability) and resilience by easily controlling the flexibility of the foam rubber layer.

In the sealing material according to the present invention, the unfoamed rubber layer contains an organic sulfonic acid compound as a crosslinking accelerator.

Examples of the organic sulfonic acid compound can include one or more selected from methanesulfonic acid (MSA), benzenesulfonic acid (BSA), trifluoromethanesulfonic acid (TFMSA), p-toluenesulfonic acid (PTSA), heptafluoropropanesulfonic acid, heptadecafluorooctanesulfonic acid, naphthalenesulfonic acid (NSA), naphthalenedisulfonic acid (NDSA), methanedisulfonic acid (MDSA), ethanedisulfonic acid (EDSA), nonafluorobutanesulfonic acid (FBSA), bis(nonafluorobutanesulfonyl)imide (BFBSI), dinonylnaphthalenesulfonic acid (DNNSA), dinonylnaphthalenedisulfonic acid (DNNDSA), dodecylbenzenesulfonic acid (DDBSA), ethanesulfonic acid (ESA), propanesulfonic acid (PSA), butanesulfonic acid (BSA), dodecanesulfonic acid (DDSA), cumenesulfonic acid (IPBSA), camphorsulfonic acid (CSA), hydroxyethanesulfonic acid (HESA), hydroxyethanedisulfonic acid (HEDSA), and the like.

When the unfoamed rubber layer contains the crosslinking accelerator, it is possible to easily provide a sealing material having excellent adhesion (sealability) and resilience by easily controlling the flexibility of the foam rubber layer.

The foaming agent constituting the unfoamed rubber layer is not particularly limited but is preferably a microcapsule obtained by encapsulating a volatile liquid foaming agent with a thermoplastic shell polymer having gas barrier properties.

When the microcapsule is heated, the outer shell of the capsule softens, and the liquid foaming agent in the capsule vaporizes to increase the pressure in the capsule. The capsule expands due to such an action, hollow spherical particles are generated, and voids are formed in the foam rubber layer due to these hollow spherical particles.

Examples of the volatile liquid foaming agent constituting the microcapsule include hydrocarbons having a low boiling point, such as isopentane, isobutane, and isopropane.

Examples of the thermoplastic shell polymer constituting the microcapsule include one or more selected from polyacrylonitrile, vinylidene chloride-acrylonitrile copolymers, vinylidene chloride-methyl methacrylate copolymers, vinylidene chloride-ethyl methacrylate, acrylonitrile-methyl methacrylate copolymers, acrylonitrile-ethyl methacrylate, and the like.

When the unfoamed rubber layer contains the above-described microcapsule as the foaming agent, it is possible to easily provide a sealing material exhibiting excellent adhesion (sealability) even in a case where the surface pressure is low by easily controlling the foaming properties of the unfoamed rubber layer and easily forming a foam rubber layer having suitable flexibility.

The content of the foaming agent in the unfoamed rubber layer in terms of solid content is preferably 1.0 to 10.0 mass% and more preferably 2.0 to 8.0 mass%.

When the unfoamed rubber layer contains the foaming agent in the above-described percentage, it is possible to easily provide a sealing material exhibiting excellent adhesion (sealability) by easily controlling the flexibility of the foam rubber layer.

In the sealing material according to the present invention, in a case where the elastic layer employs the second form, the elastic layer is formed of a layered integrated body having foam rubber layers each disposed on both main surfaces of a base material layer formed of a metal plate or a resin plate.

In the present application documents, the layered integrated body means a body in a state where individual layers adjacent to each other are chemically or physically fixed to each other.

In the sealing material according to the present invention, the metal plate or resin plate constituting the base material layer is not particularly limited.

The metal plate constituting the base material layer is not particularly limited, and examples thereof can include plate materials made of (ferritic, martensitic, austenitic, or other) stainless steel, iron, plated materials, aluminum, or the like, and can include plate-like bodies made of one or more metals selected from stainless steel, iron, or the like.

The metal plate constituting the base material layer may be a plate obtained by joining a plurality of metal plates by pasting or the like, and such a metal plate is preferably a joined body of a stainless steel plate and an iron plate.

Examples of the resin plate constituting the base material layer include plate-like bodies made of one or more resins selected from a polyethylene (PE)-based resin, a polypropylene (PP)-based resin, a polyethylene terephthalate (PET)-based resin, a polyethylene naphthalate (PEN)-based resin, a polyvinyl chloride (PVC)-based resin, a polystyrene (PS)-based resin, an acrylic resin (PMMA), a polycarbonate (PC)-based resin, a polyphenylene sulfide (PPS)-based resin, a polytetrafluoroethylene (PTFE)-based resin, a polyether ether ketone (PEEK)-based resin, a polyethersulfone (PES)-based resin, a polyamide (PA)-based resin, a polyimide (PI)-based resin, and the like.

As the resin plate constituting the base material layer, among the above-described plate-like bodies, the plate-like bodies made of one or more resins selected from a polyethylene terephthalate (PET)-based resin, a polyethylene naphthalate (PEN)-based resin, a polystyrene (PS)-based resin, a polyphenylene sulfide (PPS)-based resin, a polyethersulfone (PES)-based resin, and the like are preferable.

In the sealing material according to the present invention, the thickness of the metal plate or resin plate constituting the base material layer is not particularly limited, but is normally 1 to 500 mm.

In the present application documents, the thickness of the metal plate or the resin plate means an arithmetic average value of thicknesses measured at 10 sites using a dial gauge.

In the sealing material according to the present invention, in a case where the elastic layer employs the second form, the elastic layer has the base material layer formed of the metal plate or the resin plate, whereby it is possible to easily improve the handling properties (handleability) of the sealing material.

In the sealing material according to the present invention, the elastic layer formed of the foam rubber layer can be formed by dissolving a rubber compound containing a desired amount of an ethylene-propylene-diene terpolymer (EPDM), a desired amount of a phenol resin crosslinking agent, a desired amount of a crosslinking accelerator, a desired amount of a foaming agent, and the like in an organic solvent to produce a coating liquid, applying the coating liquid onto the main surface of an appropriate base material, fixing the coating liquid to form an unfoamed rubber layer, and then heating and foaming the unfoamed rubber layer at a predetermined temperature for a predetermined time.

The foaming ratio can be easily controlled by adjusting the kinds or blending percentages of the rubber component, the phenol resin crosslinking agent, the crosslinking accelerator, and the foaming agent that all constitutes the rubber compound, and in particular, can be easily controlled by adjusting the crosslinking rate of EPDM, which is the rubber component.

When the crosslinking rate is increased, since the rubber component crosslinks before being expanded and deformed by a foaming gas, it becomes easy to curb the foaming ratio. Conversely, when the crosslinking rate is decreased, since deformation of the rubber component by the foaming gas has a larger influence than the curing rate of rubber by crosslinking, the foaming ratio is likely to become large.

In the sealing material according to the present invention, in a case where the elastic layer formed of the foam rubber layer employs the first form, that is, a form formed only of the foam rubber layer, an intended elastic layer (an elastic layer formed only of the foam rubber layer) can be obtained by applying the coating liquid onto the main surface of an appropriate base material, such as a metal plate or a resin plate, fixing the coating liquid to form an unfoamed rubber layer, then, foaming the unfoamed rubber layer to form a foam rubber layer, and then peeling this foam rubber layer from the base material layer.

In the sealing material according to the present invention, in a case where the elastic layer formed of the foam rubber layers employs the second form, that is, a form formed of a layered integrated body having foam rubber layers each disposed on both main surfaces of a base material layer formed of a metal plate or a resin plate, an intended elastic layer (an elastic layer formed of a layered integrated body having foam rubber layers each disposed on both main surfaces of a base material layer formed of a metal plate or a resin plate, respectively) can be obtained by applying the coating liquid onto both main surfaces of a base material layer formed of a metal plate or a resin plate, fixing the coating liquid to form unfoamed rubber layers, and then foaming these unfoamed rubber layers to form foam rubber layers.

The sealing material according to the present invention further has pressure-sensitive adhesive layers each disposed on both main surfaces of the elastic layer.

In the sealing material according to the present invention, the pressure-sensitive adhesive layer is formed of a pressure-sensitive adhesive constituting the pressure-sensitive adhesive layer being attached onto the main surface of the elastic layer by the pressure-sensitive adhesive force thereof.

The thicknesses of the pressure-sensitive adhesive layers are each preferably 1 to 100 mm, more preferably 5 to 70 mm, and still more preferably 10 to 60 mm.

The thicknesses of the pressure-sensitive adhesive layers formed on both main surfaces of the elastic layer, respectively, may be the same as or different from each other.

In the sealing material according to the present invention, when the thicknesses of the pressure-sensitive adhesive layers are within the above-described range, it is possible to easily exhibit desired adhesion (sealability).

The thickness of the pressure-sensitive adhesive layer means an arithmetic average value of thicknesses measured at 10 sites using a dial gauge.

In the sealing material according to the present invention, when the thicknesses of the pressure-sensitive adhesive layers are within the above-described range, it is possible to easily impart desired adhesion (sealability) to the sealing material.

In the sealing material according to the present invention, the pressure-sensitive adhesive layer preferably contains, as a pressure-sensitive adhesive, at least one selected from an urethane resin, natural rubber (NR), butadiene rubber (BR), isoprene rubber (IR), styrene butadiene (SBR), nitrile rubber (NBR), an ethylene-propylene-diene terpolymer(EPDM), butyl rubber (IIR), chloroprene rubber (CR), a thermoplastic elastomer, and a water addition product of any thereof.

In the sealing material according to the present invention, the thermoplastic elastomer is preferably at least one selected from a styrene-based thermoplastic elastomer, an olefin-based thermoplastic elastomer, a vinyl chloride-based thermoplastic elastomer, an ester-based thermoplastic elastomer, and an amide-based thermoplastic elastomer.

In the sealing material according to the present invention, examples of the styrene-based thermoplastic elastomer include one or more selected from an a-methylstyrene-ethylene-butylene-a-methylstyrene copolymer, a styrene-butadiene-styrene triblock copolymer, a styrene-butadiene random copolymer, a styrene-isobutylene-styrene block copolymer, a hydrogenated product obtained by hydrogenating some or all of the double bonds between carbon atoms in a copolymer, such as styrene-butadiene-styrene (SBS), a maleic anhydride-modified styrene-isoprene-styrene block copolymer, a maleic anhydride-modified styrene-butadiene-styrene block copolymer (MAH-SBS), and the like.

Examples of the hydrogenated product obtained by hydrogenating some or all of the double bonds between carbon atoms in a copolymer, such as styrene-butadiene-styrene (SBS), include one or more selected from a styrene-(ethylene/propylene)-styrene block copolymer (SEPS; hydrogenated SIS), a styrene-(ethylene/butylene)-styrene block copolymer (SEBS; hydrogenated SBS), a styrene-ethylene-(ethylene/propylene)-styrene block copolymer (SEEPS; hydrogenated styrene-butadiene/isoprene-styrene block copolymer), a styrene-isobutylene-styrene block copolymer (SIBS), hydrogenated styrene butadiene (hydrogenated SBR), a maleic anhydride-modified styrene-(ethylene/butylene)-styrene block copolymer (MAH-SEBS), a maleic anhydride-modified styrene-(ethylene/propylene)-styrene block copolymer (MAH-SEPS), and the like.

In the sealing material according to the present invention, the pressure-sensitive adhesive layer contains the thermoplastic elastomer as the pressure-sensitive adhesive, whereby it is possible to easily exhibit favorable sealability compared with a case where there is no pressure-sensitive adhesive layer.

In the sealing material according to the present invention, the content of the thermoplastic elastomer in the pressure-sensitive adhesive layer in terms of solid content is preferably 50 to 100 mass% and more preferably 60 to 90 mass%.

In the sealing material according to the present invention, the pressure-sensitive adhesive layer contains the thermoplastic elastomer in the above-described percentage, whereby it is possible to easily exhibit favorable sealability.

In the sealing material according to the present invention, the pressure-sensitive adhesive layers can be formed by, for example, applying a pressure-sensitive adhesive-containing liquid containing the thermoplastic elastomer onto the main surfaces of the elastic layer obtained by the above-described method.

According to the present invention, it is possible to provide a sealing material exhibiting high adhesion (sealability) at a low surface pressure.

Next, the present invention will be more specifically described using Examples, but these are simply examples and do not limit the present invention.

### (Example 1)

### (1) Production of elastic material

A solvent of a hydrocarbon was dissolved in a rubber compound to obtain a liquid-phase unfoamed rubber composition, the rubber compound being obtained by kneading an ethylene-propylene-diene terpolymer(EPDM), which is a rubber component, a filler, a phenol resin crosslinking agent, a foaming agent, and an organic sulfonic acid, which is a crosslinking accelerator, so that the content percentage of the phenol resin crosslinking agent reached 2.6 mass% as shown in Table 1.

The obtained liquid-phase unfoamed rubber composition was coated with a coater in a predetermined thickness and then dried at 60°C in a drying furnace, thereby obtaining a 0.3 mm-thick unfoamed rubber formed product.

The unfoamed rubber formed product obtained by the above-described drying treatment was crosslinked and foamed in the oven by a thermal treatment at 180°C, thereby manufacturing an elastic material foamed to have a foaming ratio of 2.7 times.

Manufacturing conditions are shown in Table 1.

In addition, the above-described rubber compound not containing the foaming agent was prepared, and a torque change of a 3 mm-thick uncrosslinked rubber formed product formed using the obtained rubber compound was measured by the following method with a moving die rheometer (MDR). The result is shown in Table 1.

### <Measurement of torque change with moving die rheometer (MDR)>

A torque change over time of the uncrosslinked rubber formed product was measured using a moving die rheometer (MDR) based on the regulations of JIS K6300-2.

The result is shown in Table 1.

M shown in Table 1 indicates a torque value measured after 15 minutes from the start of vulcanization by the above-described method, and the value of M serves as one index of the degree of crosslinking since the torque increases as the crosslinking of the uncrosslinked rubber formed product progresses. As the M becomes higher, it means that the crosslinking density of a crosslinked rubber formed product obtained becomes higher.

What has been described above means that even in the elastic material obtained by crosslinking and foaming the unfoamed rubber formed product having the same composition as the uncrosslinked rubber formed product except that the foaming agent is not contained, the crosslinking density of foam rubber constituting the elastic material increases, it becomes easy to reduce stress relaxation when the elastic material is used as a sealing material, and excellent sealability is exhibited.

### (2) Application of pressure-sensitive adhesive

A predetermined amount of a thermoplastic elastomer pressure-sensitive adhesive liquid, which is a pressure-sensitive adhesive, was coated using the coater to both side main surfaces of the elastic material formed of the foam rubber obtained in (1) and dried in the drying furnace, thereby forming pressure-sensitive adhesive layers on both side main surfaces of the elastic material, respectively, and obtaining an intended sealing material.

The stress relaxation rate and potential gas leakage of the obtained sealing material were measured by the following methods. The results are shown in Table 1.

### <Measurement of stress relaxation rate>

A sample obtained by blanking the obtained sealing material in a doughnut shape having an inner diameter of 10 mm and an outer diameter of 20 mm was inserted between upper and lower flanges with a commercially available tensile/compression testing machine (AUTOGRAPH AG 50 kGN, manufactured by Shimadzu Corporation), compressed at an initial surface pressure of 1.0 MPa, and maintained at 25°C for 3.5 hours. After that, the surface pressure was measured at a point in time when 3.5 hours had elapsed from the start of the compression.

After that, the stress relaxation rate was obtained by the following formula. 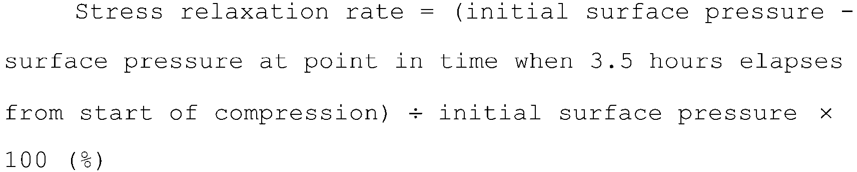 Stress relaxation rate = (initial surface pressure - surface pressure at point in time when 3.5 hours elapses from start of compression) ÷ initial surface pressure × 100 (%)

The stress relaxation rate serves as an index of the sealability of a sealing material, and in a case where a sealing material has been clamped at a predetermined clamping surface pressure, the clamping surface pressure exhibits a decreased percentage at a point in time when a predetermined time has elapsed from the start of the clamping.

As the stress relaxation rate of the sealing material decreases, it means that degradation of the sealability in the sealing material over time becomes smaller and the sealability becomes superior.

### <Evaluation of potential gas leakage>

Next, a sealing test was performed by injecting an air gas into the above-described doughnut-shaped sample inserted and crimped between the upper and lower flanges so that a predetermined gas pressure (0.3 to 0.5 MPa) was applied thereto. The pressure (MPa) that had been applied to the sealing material was confirmed with a pressure meter to confirm the presence or absence of potential gas leak, thereby evaluating the sealability.

The result is shown in Table 1.

### (Example 2 to Example 7 and Comparative Example 1 to Comparative Example 4)

### (1) Production of elastic materials

Unfoamed rubber formed products were obtained in the same manner as in Example 1 except that the blending percentage of the phenol resin crosslinking agent in terms of solid content in the rubber compound and the kind of the crosslinking accelerator being blended were changed respectively as shown in Table 1 in the "(1) Production of elastic material" in Example 1. After that, the unfoamed rubber formed products were crosslinked and foamed to have foaming ratios shown in Table 1 to manufacture elastic materials.

Manufacturing conditions are shown in Table 1.

In addition, the torque values (dN×m) of the uncrosslinked rubber formed products produced in the same manner as in Example 1, respectively, were measured by the same method as in Example 1 with a moving die rheometer (MDR). The results are shown in Table 1.

A predetermined amount of a thermoplastic elastomer pressure-sensitive adhesive liquid, which is a pressure-sensitive adhesive, was coated in the same manner as in Example 1(2) using a coater to both side main surfaces of each elastic material formed of the foam rubber obtained in each of Example 2 to Example 7 and Comparative Example 1 to Comparative Example 4 and dried in the drying furnace, thereby forming pressure-sensitive adhesive layers on both side main surfaces of each elastic material, and obtaining an intended sealing material.

In addition, in Comparative Example 1, the elastic material produced in (1) above was used directly as a sealing material without coating the pressure-sensitive adhesive layers.

The stress relaxation rates and potential gas leakage of the obtained sealing materials were measured by the same methods as in Example 1. The results are shown in Table 1.

Crosslinking accelerators shown in Table 1 by abbreviations mean the following compounds, respectively.
PTSA: p-Toluenesulfonic acid
DNNDSA: Dinonylnaphthalenedisulfonic acid
DDBSA: Dodecylbenzenesulfonic acid
DNNSA: Dinonylnaphthalenesulfonic acid

**[Table 1]**

| | | Comparative Example 1 | Comparative Example 2 | Comparative Example 3 | Comparative Example 4 | Example 1 | Example 2 | Example 3 | Example 4 | Example 5 | Example 6 | Example 7 |
|---|---|---|---|---|---|---|---|---|---|---|---|---|
| Blending percentage of phenol resin crosslinking agent (mass%) | | 2.6 | 9.6 | 9.6 | 9.6 | 2.6 | 5.0 | 9.6 | 17.5 | 9.6 | 9.6 | 9.6 |
| Crosslinking accelerator | | PTSA | None | Stearic acid | Salicylic acid | PTSA | PTSA | PTSA | PTSA | DNNDSA | DDBSA | DNNSA |
| Foaming ratio | | 2.7 | 2.1 | 2.1 | 2.2 | 2.7 | 2.9 | 3.1 | 2.5 | 2.7 | 2.2 | 2.7 |
| Pressure-sensitive adhesive layer | Presence or absence | Absent | Present | Present | Present | Present | Present | Present | Present | Present | Present | Present |
| | Thickness (µm) | - | 55 | 55 | 55 | 55 | 55 | 55 | 55 | 55 | 55 | 55 |
| MDR torque | M(dN-m) | 14.0 | 17.1 | 16.8 | 19.4 | 14.0 | 20.3 | 25.9 | 28.2 | 26.9 | 27.5 | 33.0 |
| Sealability | Surface pressure after 3.5 hours of compression (MPa) | 0.6 | 0.6 | 0.6 | 0.6 | 0.6 | 0.7 | 0.7 | 0.7 | 0.7 | 0.7 | 0.7 |
| | Stress relaxation rate (%) | 45 | 43 | 43 | 43 | 39 | 33 | 28 | 29 | 28 | 31 | 29 |
| | Presence or absence of gas leak | Present | Present | Present | Present | Absent | Absent | Absent | Absent | Absent | Absent | Absent |

The sealing materials according to the present invention obtained in Example 1 to Example 7 have an elastic material formed of foam rubber and pressure-sensitive adhesive layers each disposed on both main surfaces of the elastic material, and the foam rubber is foam rubber formed of a crosslinked and foamed body of the unfoamed rubber formed product containing the ethylene-propylene-diene terpolymer (EPDM), which is a rubber component, the phenol resin crosslinking agent, the crosslinking accelerator being an organic sulfonic acid compound, and the foaming agent.

Therefore, as shown in Table 1, the uncrosslinked rubber formed products produced in Example 1 to Example 7 had high torque values M when the torque changes were measured with MDR and had high crosslinking densities and were thus considered to exhibit excellent sealability, which enables stress relaxation to be reduced when the obtained elastic materials have been used as sealing materials.

Actually, as shown in Table 1, it is found that the sealing materials according to the present invention obtained in Example 1 to Example 7 have low stress relaxation rates even in a case where the surface pressure is low and are capable of exhibiting so excellent adhesion (sealability) that gas leak does not occur when the potential gas leakage is evaluated.

On the other hand, the sealing material obtained in Comparative Example 1 includes no pressure-sensitive adhesive layers (is formed only of the elastic material).

Therefore, as shown in Table 1, the sealing material obtained in Comparative Example 1 is found to have a high stress relaxation rate compared with the sealing material having the pressure-sensitive adhesive layers obtained in Example 1 and is found to have so poor adhesion (sealability) that gas leak occurs when the potential gas leakage is evaluated.

In addition, in the sealing materials obtained in Comparative Example 2 to Comparative Example 4, since the foam rubber constituting the elastic materials is foam rubber formed of a crosslinked and foamed body of an unfoamed rubber formed product not containing the crosslinking accelerator being an organic sulfonic acid compound, the sealing materials are found to have a high stress relaxation rate compared with the sealing material having the pressure-sensitive adhesive layers obtained in each of Example 3 and Example 5 to Example 7 and are found to have so poor adhesion (sealability) that gas leak occurs when the potential gas leakage is evaluated.

### [Industrial Applicability]

According to the present invention, it is possible to provide a sealing material exhibiting high adhesion (sealability) at a low surface pressure.

### [Reference Signs List]

- 1: Sealing material
- i: Elastic layer
- r: Foam rubber layer
- s: Pressure-sensitive adhesive layer
- b: Base material layer

## Claims

1. A sealing material comprising: an elastic layer including a foam rubber layer and pressure-sensitive adhesive layers each disposed on both main surfaces of the elastic layer,
wherein the foam rubber layer is formed of foam of an unfoamed rubber layer containing an ethylene-propylene-diene terpolymer (EPDM), a phenol resin crosslinking agent, a crosslinking accelerator, and a foaming agent, and
the crosslinking accelerator is an organic sulfonic acid compound.

2. The sealing material according to claim 1, wherein a content percentage of the phenol resin crosslinking agent in the unfoamed rubber layer is 2.0 to 20.0 mass% in terms of solid content.

3. The sealing material according to claim 1 or claim 2, wherein the elastic layer is formed only of the foam rubber layer, or is formed of a layered integrated body having the foam rubber layers each disposed on both main surfaces of a base material layer formed of a metal plate or a resin plate.

4. The sealing material according to claim 1 or claim 2, wherein an amount of a diene constituting the ethylene-propylene-diene terpolymer (EPDM) is 1 to 20 mass%.

5. The sealing material according to claim 1 or claim 2, wherein the foam rubber layer is foam having a foaming ratio 1.5 times or more larger than a foaming ratio of the unfoamed rubber layer.

6. The sealing material according to claim 1 or claim 2, wherein the pressure-sensitive adhesive layer contains at least one selected from a urethane resin, natural rubber, butadiene rubber, isoprene rubber, styrene butadiene rubber, nitrile rubber, an ethylene-propylene-diene terpolymer, butyl rubber, chloroprene rubber, a thermoplastic elastomer, and a water addition product of any thereof.

7. The sealing material according to claim 6, wherein the thermoplastic elastomer is at least one selected from a styrene-based thermoplastic elastomer, an olefin-based thermoplastic elastomer, a vinyl chloride-based thermoplastic elastomer, an ester-based thermoplastic elastomer, and an amide-based thermoplastic elastomer.
